# EUROPEAN PATENT APPLICATION

(11) **EP 4 572 402 A1**
(43) Date of publication of application: **18.06.2025**
(21) Application number: 23862278.1
(22) Date of filing: 01.09.2023
(51) Int. Cl.: H04W 36/00

(54) **CONFIGURATION METHOD AND APPARATUS**

(30) Priority: 07.09.2022 CN 202211088952
(71) Applicant: Huawei Technologies Co., Ltd., Shenzhen, Guangdong 518129 (CN)
(72) Inventor: WANG, Fanfan, Shenzhen, Guangdong 518129 (CN); HU, Xingxing, Shenzhen, Guangdong 518129 (CN); GENG, Tingting, Shenzhen, Guangdong 518129 (CN)
(74) Representative: Goddar, Heinz J.
(86) International application number: PCT/CN2023/116443
(87) International publication number: WO 2024/051584

(57) **Abstract**

Embodiments of this application provide a configuration method and an apparatus. The method includes: A source master node sends a CHO request message and receives a CHO request response message, where the CHO request response message includes information about a candidate primary secondary cell provided for a first candidate master node and RRC configuration information of the first candidate master node. The source master node determines CPAC configuration information based on the information about the candidate primary secondary cell and the RRC configuration information of the first candidate master node. The source master node sends the CPAC configuration information to a terminal device. According to the configuration method and the apparatus in this application, the source master node generates the complete CPAC configuration information, and sends the CPAC configuration information to the terminal device, so that the CPAC configuration information is coordinated and consistent with measurement configuration information determined by the source master node, and efficiency of completing a CPAC by the terminal device is improved.

## Description

This application claims priority to Chinese Patent Application No. 202211088952.4, filed with the China National Intellectual Property Administration on September 7, 2022 and entitled "CONFIGURATION METHOD AND APPARATUS", which is incorporated herein by reference in its entirety.

### TECHNICAL FIELD

Embodiments of this application relate to the communication field, and more specifically, to a configuration method and an apparatus.

### BACKGROUND

In a conventional mobile communication system, mobility management of a terminal device in a connected state is controlled by an access network device. To improve a success rate of a handover of a terminal device between different cells, a conditional handover (conditional handover, CHO) procedure is provided. Before a radio environment between the terminal device and a source base station further deteriorates, the CHO may allow the source base station to deliver in advance a handover command that includes a radio parameter configuration of a candidate target base station and a handover triggering condition to the terminal device, so that the terminal device knows in advance how to access a target base station. After finding a base station that meets the handover triggering condition in the candidate target base station, the terminal device may autonomously determine to initiate a handover, to improve the success rate of the handover.

To improve a data transmission rate and reliability, one terminal device may simultaneously access two or more nodes. One terminal device simultaneously accesses a master node (master node, MN) and a secondary node (secondary node, SN), which may be referred to as dual-connectivity (dual-connectivity, DC). One terminal device simultaneously accesses an MN and at least two SNs, which may be referred to as multi-connectivity (multi-connectivity, MC). In the DC or MC, the MN has a control plane signaling connection to a core network. The MN provides a master cell group (master cell group, MCG) for the terminal device, and the MCG includes a primary cell (primary cell, PCell). The SN provides a secondary cell group (secondary cell group, SCG) for the terminal device, and the SCG includes a primary secondary cell (primary secondary cell, PSCell). In this scenario, a conditional primary secondary cell addition/change (conditional PSCell addition/change, CPAC) procedure is provided. A principle is similar to that of the CHO procedure. The master node may trigger a conditional primary secondary cell addition, and the master node or the secondary node may trigger a conditional primary secondary cell change. After determining a candidate primary secondary cell, a measurement configuration, and an execution triggering condition corresponding to the candidate primary secondary cell, a trigger node (the master node or the secondary node) provides the candidate primary secondary cell, the measurement configuration, and the execution triggering condition corresponding to the candidate primary secondary cell for the terminal device, and the terminal device determines to add or change a primary secondary cell.

However, if a CPAC configuration and the measurement configuration that are provided for the terminal device cannot be coordinated and consistent, efficiency of completing the CPAC by the terminal device is low.

### SUMMARY

Embodiments of this application provide a configuration method and an apparatus, to improve efficiency of completing a CPAC by a terminal device by using the configuration method.

According to a first aspect, a configuration method is provided, including: A source master node sends a conditional handover CHO request message to one or more candidate master nodes. The source master node receives a CHO request response message from a first candidate master node, where the first candidate master node belongs to the one or more candidate master nodes, and the CHO request response message includes information about one or more candidate primary secondary cells provided for the first candidate master node and radio resource control (radio resource control, RRC) configuration information of the first candidate master node. The source master node determines conditional primary secondary cell addition/change CPAC configuration information based on the information about the one or more candidate primary secondary cells and the RRC configuration information of the first candidate master node. The source master node sends the CPAC configuration information to a terminal device.

Based on the foregoing solution, the source master node may generate the complete CPAC configuration information, and send the CPAC configuration information to the terminal device. The CPAC configuration information is coordinated and consistent with measurement configuration information generated by the source master node, so that the terminal device can quickly and accurately determine a primary secondary cell to be used for an addition or to be used for a change, to improve efficiency of completing a CPAC by the terminal device.

With reference to the first aspect, in some implementations of the first aspect, the source master node sends CHO configuration information and the measurement configuration information to the terminal device.

It should be understood that the source master node may send the CPAC configuration information, the CHO configuration information, and the measurement configuration information to the terminal device.

In an implementation, the source master node determines the CHO configuration information based on the RRC configuration information of the first candidate master node; and the source master node determines the measurement configuration information based on RRC configuration information of to-be-measured frequency information of the first candidate master node and a first candidate secondary node.

Based on the foregoing solution, the source master node generates and sends the CPAC configuration information, the CHO configuration information, and the measurement configuration information, so that the CPAC configuration information is coordinated and consistent with the measurement configuration information, and the measurement configuration information may be for determining whether an execution triggering condition of the CPAC and an execution triggering condition of a CHO are met. Therefore, the terminal device may measure a candidate target cell of the CHO and a candidate target cell of the CPAC, and determine whether there is a candidate target cell that meets a corresponding execution triggering condition, to improve the efficiency of completing the CPAC and efficiency of completing the CHO by the terminal device.

With reference to the first aspect, in some implementations of the first aspect, the CHO request message includes a candidate primary secondary cell information set, and the candidate primary secondary cell information set includes the information about the one or more candidate primary secondary cells.

Based on the foregoing solution, the source master node has a decision right to determine the candidate primary secondary cell, so that flexibility of the solution is improved.

With reference to the first aspect, in some implementations of the first aspect, the first candidate master node provides, in CHO request response, an execution triggering condition corresponding to the one or more candidate primary secondary cells for the source master node.

In an implementation, the first candidate master node does not provide the execution triggering condition corresponding to the one or more candidate primary secondary cells, so that when the CHO request response message does not include the execution triggering condition corresponding to the one or more candidate primary secondary cells, the source master node determines the execution triggering condition corresponding to the one or more candidate primary secondary cells.

It should be understood that the execution triggering condition corresponding to the one or more candidate primary secondary cells is the execution triggering condition of the CPAC.

Based on the foregoing solution, the source master node may determine the execution triggering condition corresponding to the candidate primary secondary cell, to improve flexibility and accuracy of determining the candidate primary secondary cell.

With reference to the first aspect, in some implementations of the first aspect, the CPAC configuration information and the CHO configuration information are included in a first message sent by the source master node to the terminal device, and the CHO configuration information includes the CPAC configuration information.

Based on the foregoing solution, the source master node includes the CPAC configuration information and the CHO configuration information in a same message, and sends the same message to the terminal device, to reduce signaling overheads.

With reference to the first aspect, in some implementations of the first aspect, CPAC configuration and the CHO configuration information are included in a second message sent by the source master node to the terminal device, the CHO configuration information includes the CPAC configuration information, and the measurement configuration information is included in a third message sent by the source master node to the terminal device.

Based on the foregoing solution, the source master node sends the CPAC configuration information and the CHO configuration information to the terminal device by using one message, and sends the measurement configuration information to the terminal device by using another message. In other words, another manner of sending the CPAC configuration information, the CHO configuration information, and the measurement configuration information by the source master node is provided, thereby increasing flexibility of transmitting information by the source master node.

With reference to the first aspect, in some implementations of the first aspect, the CPAC configuration information and the CHO configuration information are included in a fourth message sent by the source master node to the terminal device. The fourth message further includes indication information, and the indication information indicates a correspondence between the CPAC configuration information and the CHO configuration information.

Based on the foregoing solution, the source master node sends the CPAC configuration information, the CHO configuration information, and the indication information to the terminal device by using one message. In addition, the correspondence between the CPAC configuration information and the CHO configuration information is indicated by using the indication information, to increase the flexibility of transmitting information by the source master node.

With reference to the first aspect, in some implementations of the first aspect, the CPAC configuration information and the CHO configuration information are included in a fifth message sent by the source master node to the terminal device. The fifth message further includes indication information, the indication information indicates a correspondence between the CPAC configuration information and the CHO configuration information, and the measurement configuration information is included in a sixth message sent by the source master node to the terminal device.

Based on the foregoing solution, the source master node sends the CPAC configuration information, the CHO configuration information, and the indication information to the terminal device by using one message, and sends the measurement configuration information to the terminal device by using another message. The correspondence between the CPAC configuration information and the CHO configuration information is indicated by using the indication information, to increase the flexibility of transmitting information by the source master node.

With reference to the first aspect, in some implementations of the first aspect, the measurement configuration information includes a measurement object and a measurement gap. The measurement object includes a to-be-measured frequency corresponding to the one or more candidate primary secondary cells and a to-be-measured frequency corresponding to one or more candidate primary cells provided for the first candidate master node, and the measurement gap is determined based on the measurement object.

Based on the foregoing solution, the source master node sends the measurement configuration information to the terminal device, so that the terminal device performs measurement on the candidate primary cell and/or the candidate primary secondary cell based on the measurement configuration information.

With reference to the first aspect, in some implementations of the first aspect, the CHO configuration information includes information about the candidate primary cell provided for the first candidate master node and a triggering condition corresponding to the candidate primary cell provided for the first candidate master node. The CPAP configuration information includes the information about the one or more candidate primary secondary cells and the execution triggering condition corresponding to the one or more candidate primary secondary cells.

According to a second aspect, a configuration method is provided, including: A first candidate master node receives a CHO request message from a source master node. The first candidate master node sends a CHO request response message to the source master node, where the CHO request response message includes information about one or more candidate primary secondary cells provided for the first candidate master node and RRC configuration information of the first candidate master node.

Based on the foregoing solution, the first candidate master node sends, to the source master node, the CHO request response message that carries the information about the one or more candidate primary secondary cells, so that the source master node subsequently configures CHO configuration information and CPAC configuration information for a terminal device.

With reference to the second aspect, in some implementations of the second aspect, the CHO request message includes a candidate primary secondary cell information set, and the candidate primary secondary cell information set includes the information about the one or more candidate primary secondary cells.

Based on the foregoing solution, the source master node sends the candidate primary secondary cell information set to the first candidate master node, the first candidate master node does not need to determine the candidate primary secondary cell information set, and the source master node has a decision right of the candidate primary secondary cell, so that flexibility of the solution is improved.

With reference to the second aspect, in some implementations of the second aspect, when the CHO request message does not include the candidate primary secondary cell information set, the first candidate master node determines the candidate primary secondary cell information set.

Based on the foregoing solution, the first candidate master node has a decision right to determine the candidate primary secondary cell, so that flexibility of the solution is improved.

With reference to the second aspect, in some implementations of the second aspect, when the CHO request response message includes an execution triggering condition corresponding to the one or more candidate primary secondary cells, the first candidate master node determines the execution triggering condition corresponding to the one or more candidate primary secondary cells.

Based on the foregoing solution, the first candidate master node may determine the execution triggering condition corresponding to the candidate primary secondary cell, to improve flexibility and accuracy of determining a primary secondary cell to be used for an addition or to be used for a change.

With reference to the second aspect, in some implementations of the second aspect, before that the first candidate master node sends a CHO request response message to the source master node, the first candidate master node sends an addition request message to a first candidate secondary node, where the addition request message is used to request the first candidate secondary node to configure a transmission resource for the terminal device, and the first candidate secondary node is a candidate secondary node corresponding to the first candidate master node. The first candidate master node receives an addition request response message from the first candidate secondary node, where the addition request response message includes the transmission resource.

Based on the foregoing solution, the first candidate master node requests the first candidate secondary node to preconfigure the transmission resource for the terminal device, so that after determining to trigger execution of candidate primary secondary cell addition/change, the terminal device communicates with the candidate primary secondary cell by using the pre-configured transmission resource. The transmission resource may be a random access time-frequency resource.

According to a third aspect, a configuration method is provided, including: A terminal device receives CPAC configuration information, CHO configuration information, and measurement configuration information from a source master node, where the CPAC configuration information includes information about one or more candidate primary secondary cells provided for a first candidate master node and an execution triggering condition corresponding to the one or more candidate primary secondary cells, and the CHO configuration information includes information about one or more candidate primary cells that belong to the first candidate master node and an execution triggering condition corresponding to the one or more candidate primary cells; and the terminal device determines, based on the CHO configuration information and the measurement configuration information, whether the execution triggering condition corresponding to the one or more candidate primary cells is met; and/or the terminal device determines, based on the CPAC configuration information and the measurement configuration information, whether an execution triggering condition corresponding to one or more candidate primary secondary cells corresponding to a first candidate primary cell is met when an execution triggering condition corresponding to the first candidate primary cell is met, where the first candidate primary cell belongs to the one or more candidate primary cells.

Based on the foregoing solution, the terminal device determines, based on the received CHO configuration information, CPAC configuration information, and measurement configuration information that are uniformly sent by the source master node, whether there is a target primary cell and a target primary secondary cell corresponding to the target primary cell meeting a corresponding execution triggering condition. Because the CPAC configuration information is coordinated and consistent with the measurement configuration information, the measurement configuration information may be for determining whether an execution triggering condition of a CPAC and an execution triggering condition of a CHO are met. Therefore, the terminal device may measure a candidate target cell of the CHO and a candidate target cell of the CPAC, and determine whether there is a candidate target cell that meets a corresponding triggering condition, to improve efficiency of completing the CPAC and efficiency of completing the CHO by the terminal device.

With reference to the third aspect, in some implementations of the third aspect, when the execution triggering condition corresponding to the first candidate primary cell is met, and an execution triggering condition corresponding to a first candidate primary secondary cell in the one or more candidate primary secondary cells corresponding to the first candidate primary cell is met, the terminal device performs a handover to the first candidate primary cell, and the terminal device adds or changes the first candidate primary secondary cell.

Based on the foregoing solution, when both a candidate primary cell and a candidate primary secondary cell in the candidate target cell meet corresponding execution triggering conditions, the terminal device may add or change the candidate primary secondary cell in a process of performing a handover to the candidate primary cell, to improve efficiency of performing a handover the terminal device to a target cell.

With reference to the third aspect, in some implementations of the third aspect, when the execution triggering condition corresponding to the first candidate primary cell is met, and the execution triggering condition corresponding to the one or more candidate primary secondary cells corresponding to the first candidate primary cell is not met, the terminal device performs the handover to the first candidate primary cell, and the terminal device reserves the CPAC configuration information, to continue evaluating whether the CPAC meets the triggering condition.

Based on the foregoing solution, when only the candidate primary cell meets the corresponding execution triggering condition, the terminal device may first perform a handover process to the candidate primary cell, and continue evaluating quality of service of the candidate primary secondary cell. When the candidate primary secondary cell meets the corresponding execution triggering condition, the terminal device may add or change the candidate primary secondary cell, so that flexibility of the solution is improved.

With reference to the third aspect, in some implementations of the third aspect, the CPAC configuration information and the CHO configuration information are included in a first message received by the terminal device from the source master node, and the CHO configuration information includes the CPAC configuration information.

Based on the foregoing solution, the terminal device receives a message that includes the CPAC configuration information and the CHO configuration information, so that signaling overheads can be reduced.

With reference to the third aspect, in some implementations of the third aspect, the CPAC configuration and the CHO configuration information are included in a second message received by the terminal device from the source master node, the CHO configuration information includes the CPAC configuration information, and the measurement configuration information is included in a third message received by the terminal device from the source master node.

Based on the foregoing solution, the terminal device receives a message that includes the CPAC configuration information and the CHO configuration information, and receives another message that includes the measurement configuration information. In other words, another manner in which the terminal device receives the CPAC configuration information, the CHO configuration information, and the measurement configuration information is provided, thereby increasing flexibility of transmitting information by the terminal device.

With reference to the third aspect, in some implementations of the third aspect, the CPAC configuration information and the CHO configuration information are included in a fourth message received by the terminal device from the source master node. The fourth message further includes indication information, and the indication information indicates a correspondence between the CPAC configuration information and the CHO configuration information.

Based on the foregoing solution, the terminal device receives a message that includes the CPAC configuration information, the CHO configuration information, and the indication information, and indicates the correspondence between the CPAC configuration information and the CHO configuration information by using the indication information, to increase the flexibility of transmitting information by the terminal device.

With reference to the third aspect, in some implementations of the third aspect, the CPAC configuration information and the CHO configuration information are included in a fifth message received by the terminal device from the source master node. The fifth message further includes indication information, the indication information indicates a correspondence between the CPAC configuration information and the CHO configuration information, and the measurement configuration information is included in a sixth message received by the terminal device from the source master node.

Based on the foregoing solution, the terminal device receives a message that includes the CPAC configuration information, the CHO configuration information, and the indication information, and receives another message that includes the measurement configuration information. The correspondence between the CPAC configuration information and the CHO configuration information is indicated by using the indication information, to increase the flexibility of transmitting information by the terminal device.

With reference to the third aspect, in some implementations of the third aspect, the measurement configuration information includes a measurement object and a measurement gap. The measurement object includes a to-be-measured frequency corresponding to the one or more candidate primary secondary cells and a to-be-measured frequency corresponding to the candidate primary cell, and the measurement gap is determined based on the measurement object.

Based on the foregoing solution, the terminal device receives the measurement configuration information, and measures the candidate primary cell and/or the candidate primary secondary cell based on the measurement configuration information.

According to a fourth aspect, a communication apparatus is provided. The communication apparatus is an access network device, or an apparatus having some or all functions of the access network device. The access network device may be used as a source master node of a terminal device. The apparatus includes: a transceiver unit, configured to send a CHO request message to one or more candidate master nodes, and further configured to receive a CHO request response message from a first candidate master node, where the first candidate master node belongs to the one or more candidate master nodes, and the CHO request response message includes information about one or more candidate primary secondary cells provided for the first candidate master node and RRC configuration information of the first candidate master node; and a processing unit, configured to determine CPAC configuration information based on the information about the one or more candidate primary secondary cells and the RRC configuration information of the first candidate master node, where the transceiver unit is further configured to send the CPAC configuration information to the terminal device.

With reference to the fourth aspect, in some implementations of the fourth aspect, the transceiver unit is further configured to send CHO configuration information and measurement configuration information to the terminal device.

With reference to the fourth aspect, in some implementations of the fourth aspect, the CHO request message includes a candidate primary secondary cell information set, and the candidate primary secondary cell information set includes the information about the one or more candidate primary secondary cells.

With reference to the fourth aspect, in some implementations of the fourth aspect, the transceiver unit is further configured to provide, by the first candidate master node in CHO request response, an execution triggering condition corresponding to the one or more candidate primary secondary cells for the source master node. In an implementation, the first candidate master node does not provide the execution triggering condition corresponding to the one or more candidate primary secondary cells, so that when the CHO request response message does not include the execution triggering condition corresponding to the one or more candidate primary secondary cells, the processing unit is further configured to determine the execution triggering condition corresponding to the one or more candidate primary secondary cells.

With reference to the fourth aspect, in some implementations of the fourth aspect, the CPAC configuration information and the CHO configuration information are included in a first message sent by the transceiver unit to the terminal device, and the CHO configuration information includes the CPAC configuration information.

With reference to the fourth aspect, in some implementations of the fourth aspect, CPAC configuration and the CHO configuration information are included in a second message sent by the transceiver unit to the terminal device, the CHO configuration information includes the CPAC configuration information, and the measurement configuration information is included in a third message sent by the transceiver unit to the terminal device.

With reference to the fourth aspect, in some implementations of the fourth aspect, the CPAC configuration information and the CHO configuration information are included in a fourth message sent by the transceiver unit to the terminal device. The fourth message further includes indication information, and the indication information indicates a correspondence between the CPAC configuration information and the CHO configuration information.

With reference to the fourth aspect, in some implementations of the fourth aspect, the CPAC configuration information and the CHO configuration information are included in a fifth message sent by the transceiver unit to the terminal device. The fifth message further includes indication information, the indication information indicates a correspondence between the CPAC configuration information and the CHO configuration information, and the measurement configuration information is included in a sixth message sent by the transceiver unit to the terminal device.

With reference to the fourth aspect, in some implementations of the fourth aspect, the measurement configuration information includes a measurement object and a measurement gap. The measurement object includes a to-be-measured frequency corresponding to the one or more candidate primary secondary cells and a to-be-measured frequency corresponding to a candidate primary cell provided for the first candidate master node, and the measurement gap is determined based on the measurement object.

According to a fifth aspect, a communication apparatus is provided. The communication apparatus is an access network device, or an apparatus having some or all functions of the access network device. The access network device may be used as a candidate master node (for example, referred to as a first candidate master node) of a terminal device. The apparatus includes: a transceiver unit, configured to receive a CHO request message from a source master node, and further configured to send a CHO request response message to the source master node, where the CHO request response message includes information about one or more candidate primary secondary cells provided for the first candidate master node and RRC configuration information of the first candidate master node.

With reference to the fifth aspect, in some implementations of the fifth aspect, the CHO request message includes a candidate primary secondary cell information set, and the candidate primary secondary cell information set includes the information about the one or more candidate primary secondary cells.

With reference to the fifth aspect, in some implementations of the fifth aspect, the processing unit is configured to: when the CHO request message does not include the candidate primary secondary cell information set, determine the candidate primary secondary cell information set.

With reference to the fifth aspect, in some implementations of the fifth aspect, when the CHO request response message includes an execution triggering condition corresponding to the one or more candidate primary secondary cells, the processing unit is further configured to determine the execution triggering condition corresponding to the one or more candidate primary secondary cells.

With reference to the fifth aspect, in some implementations of the fifth aspect, before the transceiver unit sends the CHO request response message to the source master node, the transceiver unit is further configured to send an addition request message to a first candidate secondary node, where the addition request message is used to request the first candidate secondary node to configure a transmission resource for the terminal device, and the first candidate secondary node is a candidate secondary node corresponding to the first candidate master node; and is further configured to receive an addition request response message from the first candidate secondary node, where the addition request response message includes the transmission resource.

According to a sixth aspect, a communication apparatus is provided. The communication apparatus is a terminal device, or an apparatus having some or all functions of the terminal device. The apparatus includes: a transceiver unit, configured to receive CPAC configuration information, CHO configuration information, and measurement configuration information from a source master node, where the CPAC configuration information includes information about one or more candidate primary secondary cells provided for a first candidate master node and an execution triggering condition corresponding to the one or more candidate primary secondary cells, and the CHO configuration information includes information about one or more candidate primary cells that belong to the first candidate master node and an execution triggering condition corresponding to the one or more candidate primary cells; a processing unit, configured to determine, based on the CHO configuration information and the measurement configuration information, whether the execution triggering condition corresponding to the one or more candidate primary cells is met, and/or determine, based on the CPAC configuration information and the measurement configuration information, whether an execution triggering condition corresponding to one or more candidate primary secondary cells corresponding to a first candidate primary cell is met when an execution triggering condition corresponding to the first candidate primary cell is met, where the first candidate primary cell belongs to the one or more candidate primary cells.

With reference to the sixth aspect, in some implementations of the sixth aspect, the processing unit is further configured to: when the execution triggering condition corresponding to the first candidate primary cell is met, and an execution triggering condition corresponding to a first candidate primary secondary cell in the one or more candidate primary secondary cells corresponding to the first candidate primary cell is met, perform a handover to the first candidate primary cell and add or change the first candidate primary secondary cell.

With reference to the sixth aspect, in some implementations of the sixth aspect, the processing unit is further configured to: when the execution triggering condition corresponding to the first candidate primary cell is met, and the execution triggering condition corresponding to the one or more candidate primary secondary cells corresponding to the first candidate primary cell is not met, perform the handover to the first candidate primary cell, and reserve the CPAC configuration information, to continue evaluating whether the CPAC meets the triggering condition.

With reference to the sixth aspect, in some implementations of the sixth aspect, the CPAC configuration information and the CHO configuration information are included in a first message received by the transceiver unit from the source master node, and the CHO configuration information includes the CPAC configuration information.

With reference to the sixth aspect, in some implementations of the sixth aspect, the CPAC configuration and the CHO configuration information are included in a second message received by the transceiver unit from the source master node, the CHO configuration information includes the CPAC configuration information, and the measurement configuration information is included in a third message received by the transceiver unit from the source master node.

With reference to the sixth aspect, in some implementations of the sixth aspect, the CPAC configuration information and the CHO configuration information are included in a fourth message received by the transceiver unit from the source master node. The fourth message further includes indication information, and the indication information indicates a correspondence between the CPAC configuration information and the CHO configuration information.

With reference to the sixth aspect, in some implementations of the sixth aspect, the CPAC configuration information and the CHO configuration information are included in a fifth message received by the transceiver unit from the source master node. The fifth message further includes indication information, the indication information indicates a correspondence between the CPAC configuration information and the CHO configuration information, and the measurement configuration information is included in a sixth message received by the transceiver unit from the source master node.

With reference to the sixth aspect, in some implementations of the sixth aspect, the measurement configuration information includes a measurement object and a measurement gap. The measurement object includes a to-be-measured frequency corresponding to the one or more candidate primary secondary cells and a to-be-measured frequency corresponding to the candidate primary cell, and the measurement gap is determined based on the measurement object.

According to a seventh aspect, a communication apparatus is provided, including a processor coupled to a memory, where the memory is configured to store a computer program, and the processor is configured to run the computer program, so that the communication apparatus performs the method in any one of the first aspect and the possible implementations of the first aspect, or the communication apparatus performs the method in any one of the second aspect and the possible implementations of the second aspect, or the communication apparatus performs the method according to any one of the third aspect and the possible implementations of the third aspect. When performing the implementation of the first aspect or the second aspect, the communication apparatus may be an access network device or an apparatus having some or all functions of the access network device. When performing the implementation of the third aspect, the communication apparatus may be a terminal device or an apparatus having some or all functions of the terminal device. For example, the communication apparatus may be a chip.

With reference to the seventh aspect, in some implementations of the seventh aspect, the communication apparatus further includes one or both of the memory and a transceiver, and the transceiver is configured to receive a signal and/or send a signal.

According to an eighth aspect, a communication system is provided. The communication system includes a source master node configured to perform the method in any one of the first aspect and the possible implementations of the first aspect, and one or more candidate master nodes including a first candidate master node, where the first candidate master node is configured to perform the method in any one of the second aspect and the possible implementations of the second aspect.

With reference to the eighth aspect, in some implementations of the eighth aspect, the communication system includes a terminal device configured to perform the method in any one of the third aspect and the possible implementations of the third aspect.

According to a ninth aspect, a computer-readable storage medium is provided. The computer-readable storage medium includes a computer program or instructions. When the computer program or the instructions are run on a computer, the method in any one of the first aspect and the possible implementations of the first aspect is performed, the method in any one of the second aspect and the possible implementations of the second aspect is performed, or the method in any one of the third aspect and the possible implementations of the third aspect is performed.

According to a tenth aspect, a computer program product is provided. The computer program product includes a computer program or instructions. When the computer program or the instructions are run on a computer, the method in any one of the first aspect and the possible implementations of the first aspect is performed, the method in any one of the second aspect and the possible implementations of the second aspect is performed, or the method in any one of the third aspect and the possible implementations of the third aspect is performed.

According to an eleventh aspect, a computer program is provided. When the computer program is run on a computer, the method in any one of the first aspect and the possible implementations of the first aspect is performed, the method in any one of the second aspect and the possible implementations of the second aspect is performed, or the method in any one of the third aspect and the possible implementations of the third aspect is performed.

### BRIEF DESCRIPTION OF DRAWINGS

FIG. 1 is a diagram of a network architecture according to an embodiment of this application;
FIG. 2 is a communication system according to an embodiment of this application;
FIG. 3 is a schematic flowchart of a configuration method 300 according to an embodiment of this application;
FIG. 4 is a schematic flowchart of a configuration method 400 according to an embodiment of this application;
FIG. 5 is a schematic flowchart of a configuration method 500 according to an embodiment of this application;
FIG. 6 is a block diagram of a communication apparatus 600 according to an embodiment of this application;
FIG. 7 is a block diagram of another communication apparatus 700 according to an embodiment of this application; and
FIG. 8 is a diagram of a chip system 800 according to an embodiment of this application.

### DESCRIPTION OF EMBODIMENTS

The following describes technical solutions of embodiments of this application with reference to the accompanying drawings.

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

Network elements mainly involved in this application include a terminal device and an access network device.

The terminal device is also be referred to as user equipment (user equipment, UE), a mobile station (mobile station, MS), a mobile terminal (mobile terminal, MT), or the like, and is a device that provides a user with voice and/or data connectivity, for example, a handheld device or a vehicle-mounted device having a wireless connection function. Currently, some examples of a terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control, a wireless terminal in the vehicle to everything, a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like. The terminal may have a plurality of SIMs.

The access network device is a radio access network (radio access network, RAN) node (or device) that connects a terminal to a wireless network, for example, a base station. Currently, some examples of the RAN node are: a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), a wireless fidelity (wireless fidelity, Wi-Fi) access point (access point, AP), or the like. The access network device in this application is a node, and includes but is not limited to a source master node (source master node, S-MN), a candidate master node (candidate master node, C-MN), and a candidate secondary node (candidate secondary node, C-SN).

The following briefly describes a network architecture applicable to this application.

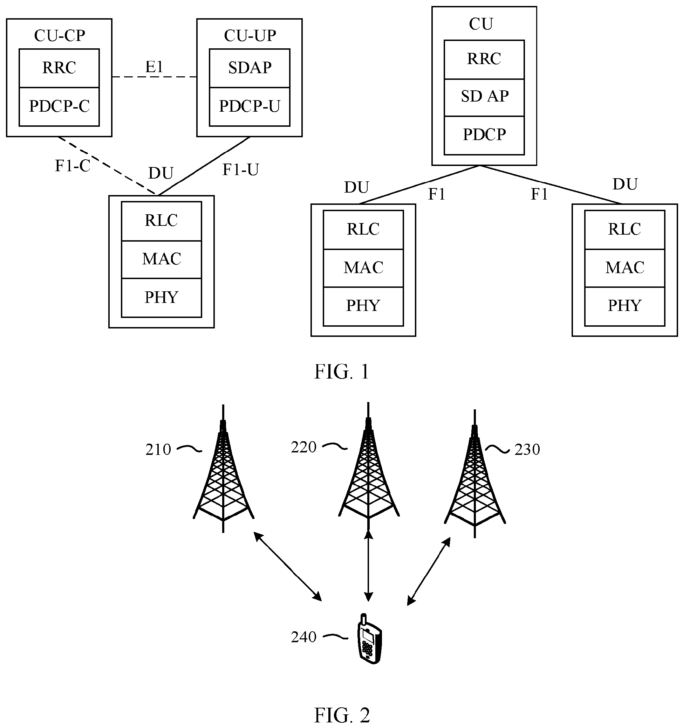

For example, FIG. 1 shows a diagram of a network architecture. In the network architecture, an access network device may include a central unit (central unit, CU) node, a distributed unit (distributed unit, DU) node, or a RAN device including the CU node and the DU node. The RAN device including the CU node and the DU node splits a base station, for example, protocol layers of a gNB. Functions of some protocol layers are controlled by the CU in a centralized manner. Functions of some or all of remaining protocol layers are distributed in the DU, and the CU controls the DU in a centralized manner.

In an implementation, a radio resource control (radio Resource Control, RRC) layer, a PDCP layer, and a service data adaptation protocol (service data adaptation protocol, SDAP) layer in a protocol stack are deployed in the CU. A radio link control (radio link control, RLC) layer, a media access control (media access control, MAC) layer, and a physical layer (physical layer, PHY) in a protocol stack are deployed in the DU. Therefore, the CU has RRC, PDCP, and SDAP processing capabilities. The DU has RLC, MAC, and PHY processing capabilities. It may be understood that the foregoing function division is merely an example, and constitutes no limitation on the CU and the DU. In other words, there may be another function division manner between the CU and the DU. Details are not described in embodiments of this application. The functions of the CU may be implemented by one entity, or may be implemented by different entities. For example, the functions of the CU may be further divided. For example, a control plane (CP) and a user plane (UP) are separated, that is, a CU control plane (CU-CP) and a CU user plane (CU-UP) are separated. For example, the CU-CP and the CU-UP may be implemented by different function entities, and the CU-CP and the CU-UP may be coupled to the DU, to jointly implement a function of a base station. The control plane CU-CP of the CU further includes a further division architecture. In other words, an existing CU-CP is further divided into a CU-CP 1 and a CU-CP 2. The CU-CP 1 includes various radio resource management functions, and the CU-CP 2 includes only an RRC function and a PDCP-C function (that is, a basic function of control plane signaling at the PDCP layer).

In another possible manner, the CU-CP is responsible for a control plane function, and mainly includes RRC and PDCP-C. The PDCP-C is mainly responsible for data encryption and decryption, integrity protection, data transmission, and the like on the control plane. The CU-UP is responsible for a user plane function, and mainly includes an SDAP and PDCP-U. The SDAP is mainly responsible for processing data of a core network and mapping a data flow (flow) to a bearer. The PDCP-U is mainly responsible for data plane encryption and decryption, integrity protection, header compression, sequence number maintenance, data transmission, and the like. The CU-CP and the CU-UP are connected through an E1 interface. The CU-CP indicates that the gNB is connected to the core network through an Ng interface, and is connected to the DU through F1-C (control plane). The CU-UP is connected to the DU through F1-U (user plane). Certainly, in another possible implementation, the PDCP-C is alternatively in the CU-UP.

For ease of understanding, the following first briefly describes terms used in this application.

### 1. Handover (handover)

In a conventional handover procedure in a mobile communication network, mobility management of a terminal device in a connected mode is controlled by a network device. To be specific, the network device sends a handover message, to indicate, to the terminal device, a target cell to which the terminal device is to be handed over and how to perform the handover. Specifically, after receiving the handover message sent by the network device, the terminal device may access the target cell based on content included in the handover message.

### 2. Conditional handover (conditional handover, CHO)

To improve a success rate of a handover of a terminal device between different cells, a CHO procedure is provided. To be specific, when source link quality is good, a source base station sends conditional handover configuration information to the terminal device. The conditional handover configuration information may include a triggering parameter of a handover condition and information about one or more candidate cells. The information about the candidate cell includes one or more pieces of information, for example, a cell global identifier (cell global identifier, CGI) of the candidate cell, a physical cell identifier (physical cell identifier, PCI) of the candidate cell and frequency information corresponding to the candidate cell, a cell radio network temporary identifier (cell radio network temporary identifier, C-RNTI) allocated by a target cell to the terminal device, or a random access channel (random access channel, RACH) resource information (for example, dedicated RACH resource information and/or common RACH resource information) required for accessing the target cell. After receiving the foregoing handover message, the terminal device measures, based on the configuration information, whether cell quality of the candidate cell meets a handover triggering condition, and uses a candidate cell that meets the handover triggering condition as the target cell. The terminal device performs a random access procedure with the target cell. When random access succeeds, the terminal device sends an RRC reconfiguration complete message to a base station to which the target cell belongs, to notify the target base station that the conditional handover is completed.

### 3. Multi-radio dual connectivity (multi-radio dual connectivity, MR-DC)

MR-DC may also be referred to as dual-connectivity (dual-connectivity, DC). For example, a dual connectivity mode includes the following four types: evolved universal terrestrial radio access and new radio dual connectivity (E-UTRA NR dual connectivity, EN-DC), next generation radio access technology and evolved universal terrestrial radio access dual connectivity (next generation-RAN E-UTRA dual connectivity, NGEN-DC), new radio-dual connectivity (new radio-dual connectivity, NR-DC), and new radio and evolved universal terrestrial radio access dual connectivity (NR E-UTRA dual connectivity, NE-DC).

In a DC communication mode, a master node (master node, MN) and a secondary node (secondary node, SN) separately provide a transmission resource for a terminal device, and the terminal device may maintain communication with both the MN and the SN, so that a data transmission rate of the terminal device can be increased. The MN has a control plane connection to a core network, and the MN and/or the SN have/has a data plane connection to the core network. The MN and the SN may be base stations using a same radio access technology (radio access technology, RAT). For example, in an NR-DC scenario, both the MN and the SN are gNBs. Alternatively, the MN and the SN may be base stations using different RATs. For example, in an EN-DC scenario, the MN is an eNB, and the SN is a gNB; or in an NN-DC scenario, the MN is a gNB, and the SN is an eNB. In addition, in an NGEN-DC scenario, the MN is an eNB connected to a 5G core network (5G Core, 5GC), and the SN is an eNB. When both the MN and the SN are base stations, the MN is also referred to as a master base station, and the SN is also referred to as a secondary base station.

In a multi-connectivity (multi-connectivity, MC) communication mode, the terminal device may maintain communication with the MN and at least two SNs simultaneously. The MC is similar to the DC, and details are not described again.

### 4. Conditional primary secondary cell addition/change (conditional PSCell addition/change, CPAC)

In an MR-DC scenario, an access network device side triggers a primary secondary cell (primary SCG cell, PSCell) addition, and the PSCell addition is triggered by a master node. Usually, due to mobility of a terminal device, the access network device side triggers a PSCell change (that is, the access network device side indicates the terminal device to perform a handover from one PSCell to another PSCell). The PSCell change may be triggered by an MN, or may be triggered by an SN.

For example, the access network device side learns, based on a measurement result of the terminal device, that signal quality of one PSCell becomes worse and signal quality of another PSCell becomes better. The access network device side indicates the terminal device to perform a PSCell change. The PSCell change may be that the terminal device performs a handover from a PSCell of an SN to a PSCell of another SN, or may be that the terminal device performs a handover from a PSCell of an SN to another PSCell of the SN.

An addition or a change of a single primary secondary cell may be referred to as a PSCell addition/change (PAC), and combination of a CHO technology and a PAC technology may be referred to as a CPAC, that is, the CHO technology is used in the PSCell addition or change.

Similar to the CHO technology, a trigger node (the MN or the SN) prepares a plurality of candidate primary secondary cells in advance, and sends information about the candidate PSCell, measurement configuration information, and a handover triggering condition to the terminal device. After the terminal device receives CPAC configuration information, when a candidate PSCell triggers a CPAC procedure, the terminal device uses the candidate PSCell as a target cell and performs a PSCell addition or change procedure.

### 5. Cell (cell)

A cell is described from a perspective of resource management or mobility management or a service unit. A coverage area of each access network device may be divided into one or more cells, and the cell may be considered as including a specific frequency domain resource. The cell may be a region within a coverage area of a wireless network of the access network device. In embodiments of this application, different cells may correspond to different access network devices. For example, an access network device to which a cell #1 belongs and an access network device to which a cell #2 belongs may be different access network devices, for example, base stations. That is, the cell #1 and the cell #2 may be managed by different base stations. In this case, the cell #1 and the cell #2 may be referred to as being co-sited, or in a same site. The access network device to which the cell #1 belongs and the access network device to which the cell #2 belongs may alternatively be different radio frequency processing units of a same base station, for example, radio remote units (radio remote units, RRUs). In other words, the cell #1 and the cell #2 may be managed by a same base station and have a same baseband processing unit and a same intermediate frequency processing unit, but have different radio frequency processing units. This is not specifically limited in this application.

A cell handover is a handover that needs to be performed in a wireless communication system to maintain uninterrupted communication of a terminal device when the terminal device moves from a cell to another cell. In this application, a source cell represents a cell that provides a service for the terminal device before the handover, and a target cell represents a cell that provides a service for the terminal device after the handover (for example, a candidate primary cell (primary cell, PCell) selected by the terminal device in a CHO procedure, and/or a candidate PSCell selected by the terminal device in a CPAC procedure). In other words, the source cell is a serving cell before the terminal device performs the cell handover, and the target cell is a serving cell after the terminal device performs the cell handover. It should be understood that the cell is the coverage area of the access network device, the source cell corresponds to a source access network device, and the target cell corresponds to a target access network device. In this application, the source access network device includes, for example, a source master node (source MN, S-MN), and the target access network device includes, for example, a target master node (target MN, T-MN) or a target secondary node (target SN, T-SN). In addition, when both the CHO procedure and the CPAC procedure are performed, an access network device to which a candidate cell for a CHO belongs may be referred to as a candidate master node (candidate MN, C-MN), and an access network device to which a candidate primary secondary cell of a CPAC belongs may be referred to as a candidate secondary node (candidate SN, C-SN). It may be understood that, in the CHO procedure and the CPAC procedure, a quantity of candidate nodes (C-MNs or C-SNs) may be an integer greater than or equal to 1. This is not limited in embodiments of this application.

### 6. Primary cell (primary cell, PCell)

A PCell is a cell operating on a primary carrier. A terminal device establishes an initial connection process or starts a connection re-establishment process in the PCell. In a handover process, the cell is indicated as the PCell.

A cell group in which an MN in MR-DC provides a service for the terminal device may be referred to as a master cell group (master cell group, MCG). When there is only one cell in the MCG, the cell is a PCell of the terminal device.

### 7. Primary secondary cell (primary secondary cell, PSCell)

A cell group in which an SN in MR-DC provides a service for a terminal device may be referred to as a secondary cell group (secondary cell group, SCG). When there is only one cell in the SCG, the cell is a main PSCell of the terminal device. The primary secondary cell is a cell in which the terminal device may be indicated to perform random access or initial physical uplink shared channel (physical uplink shared channel, PUSCH) transmission (for example, a random access procedure is omitted in an SCG change procedure).

### 8. Secondary cell (secondary cell, SCell)

A secondary cell is a cell operating on a secondary carrier. Once an RRC connection is established, the SCell may be configured to provide an additional radio resource. In an MR-DC scenario, all cells except a PCell in an MCG and a PSCell in an SCG may be referred to as SCells.

### 9. Measurement configuration information

Regardless of a CHO procedure or a CPAC procedure, a terminal device may perform cell measurement based on corresponding measurement configuration information. The measurement configuration information may be sent by an access network device side to the terminal device by using a message. The terminal device reports a measurement result to a node after performing measurement based on the measurement configuration information.

Based on the CHO procedure and the CPAC procedure, embodiments of this application provide a configuration method and an apparatus. In the method, a same access network device configures coordinated and consistent CPAC configuration information and measurement configuration information for a terminal device, and configures a CHO for the terminal device. The measurement configuration information may be used by the terminal device to determine whether an execution triggering condition of the CHO and an execution triggering condition of a CPAC are met. Therefore, the terminal device measures a candidate target cell of the CHO and a candidate target cell of the CPAC, and determines whether there is a candidate target cell that meets a corresponding execution triggering condition, to improve efficiency of completing the CPAC, and add or change to a more appropriate PSCell.

FIG. 2 shows a communication system 200 to which embodiments of this application are applied. The communication system may include at least three access network devices (nodes). For example, an S-MN 210, a C-MN 220, and a C-SN 230. The S-MN may be understood as an access network device that communicates with the terminal device in the foregoing CHO procedure, the C-MN may be understood as an access network device that can trigger a candidate PSCell addition or change in the foregoing CPAC procedure, and the C-SN may be understood as an access network device that can trigger a candidate PSCell change in the foregoing CPAC procedure. The S-MN 210, the C-MN 220, and the C-SN 230 are all devices that can communicate with the terminal device, such as base stations or base station controllers. Each access network device may provide communication coverage for an identified geographical area, and may communicate with a terminal device located in the coverage area (a cell). The wireless communication system 200 further includes a terminal device 240. The terminal device 240 may be mobile or fixed.

FIG. 2 shows an example of three access network devices and one terminal device. For example, the communication system 200 may include a plurality of access network devices, and a coverage area of each access network device may include another quantity of terminal devices. This is not limited in embodiments of this application.

A plurality of antennas may be configured for the foregoing communication devices, such as the S-MN 210, the C-MN 220, the C-SN 230, and the terminal device 240 in FIG. 2. The plurality of antennas may include at least one transmit antenna configured to send a signal and at least one receive antenna configured to receive a signal. In addition, each communication device further additionally includes a transmitter chain and a receiver chain. A person of ordinary skill in the art may understand that both the transmitter chain and the receiver chain may include a plurality of components (for example, a processor, a modulator, a multiplexer, a demodulator, a demultiplexer, or an antenna) related to signal sending and receiving. Therefore, the access network device and the terminal device may communicate with each other by using a multi-antenna technology.

For example, the wireless communication system 200 may further include other network entities such as a network controller or a mobility management entity. This is not limited in embodiments of this application.

Embodiments provided in this application are described below in detail with reference to the accompanying drawings. A network side device like an S-MN, a C-MN, or a C-SN in this application may be a base station or another access network device having some or all base station functions, for example, a CU or a DU.

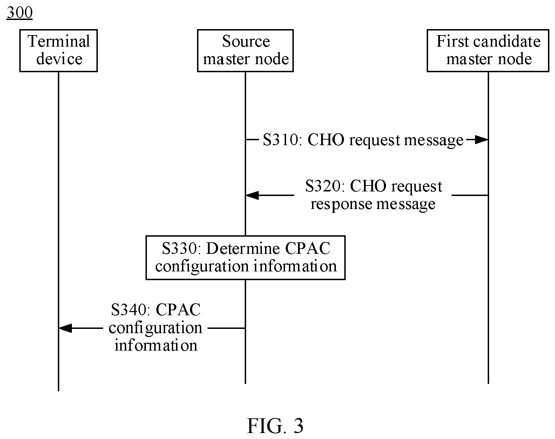

FIG. 3 shows a schematic flowchart of a configuration method 300 according to an embodiment of this application. The method 300 may be applied to the communication system 200 shown in FIG. 2. However, this embodiment of this application is not limited thereto. The method 300 may include the following steps.

S310: An S-MN sends a CHO request message to one or more C-MNs.

It should be understood that the S-MN separately sends the CHO request message to the one or more C-MNs, and a first C-MN belongs to the one or more C-MNs. Therefore, the first C-MN can receive the CHO request message sent by the S-MN.

In an implementation, the S-MN determines a candidate PSCell information set, where the candidate PSCell information set includes information about one or more candidate PSCells. The CHO request message sent by the S-MN to the one or more C-MNs includes the candidate PSCell information set. The information about the candidate PSCell may include an identifier of the candidate PSCell.

For example, the candidate PSCell information set is a list of candidate PSCells, or a form of a set of other candidate PSCell information. The list of candidate PSCells may include identifiers of the one or more candidate PSCells, and may further include an identifier of a C-SN to which the one or more candidate PSCells belong. In a possible implementation, the list of candidate PSCells includes a measurement result, the measurement result includes measurement results of the one or more candidate PSCells and/or non-candidate PSCells, and the non-candidate PSCell may be a candidate SCell.

In an implementation, the CHO request message does not include the candidate PSCell information set. When the CHO request message does not include the candidate PSCell information set, the first C-MN determines the candidate PSCell information set.

It should be understood that the CHO request message may further include the measurement result and a neighboring cell relationship, and the first C-MN may determine the candidate PSCell information set based on the measurement result and the neighboring cell relationship that are included in the CHO request message. The neighboring cell relationship may be understood as a relationship between the one or more candidate PSCells.

It should be noted that the candidate PSCell information set in the CHO request message may be the same as or different from information about one or more candidate PSCells provided for the first C-MN in a CHO request response message.

S320: The first C-MN sends the CHO request response message to the S-MN.

It should be understood that the first C-MN determines, based on the received CHO request message, whether access is allowed, and prepares an air interface resource. When determining that the access is allowed, the first C-MN sends the CHO request response message to the S-MN.

In an implementation, the CHO request response message includes the information about the one or more candidate PSCells provided for the first C-MN, and the information indicates information about a candidate PSCell that is accepted by a first C-SN and RRC configuration information of the first C-MN. For example, the information about the candidate PSCell that is accepted by the first C-SN includes identifier information of the candidate PSCell and SCG air interface resource configuration information corresponding to the candidate PSCell, and the RRC configuration information of the first C-MN includes identifier information of a candidate PCell and MCG air interface resource configuration information corresponding to the candidate PCell.

It should be understood that the candidate PSCell belongs to the C-SN, and the first C-SN belongs to the foregoing one or more C-SNs. The first C-MN may determine the first C-SN based on the candidate PSCell information set. Further, the first C-MN may learn of information about a candidate PSCell provided for the first C-SN, and the information about the candidate PSCell may be included in the CHO request response message. It may be understood that the first C-MN corresponds to the first C-SN. Specifically, when the first C-MN is used as an MN of a terminal device, a first S-MN may be used as an SN of the terminal device.

In an implementation, the CHO request response message includes an execution triggering condition corresponding to the one or more candidate PSCells.

In an implementation, when the first C-MN determines the execution triggering condition corresponding to the one or more candidate PSCells, the CHO request response message includes the execution triggering condition corresponding to the one or more candidate PSCells.

For example, the execution triggering condition includes a configuration of one or more measurement events. For example, a measurement event of the execution triggering condition is an A3 event, and the condition is that a primary secondary cell change may be performed when reference signal received power (reference signal received power, RSRP) of the candidate PSCell is higher than that of a source PSCell by 3 dB. In this case, after finding, in the candidate PSCell, a target cell that meets the condition, the terminal device may autonomously determine to perform a PSCell change. For another example, a measurement event of the execution triggering condition is an A4 event, and the condition is that a PSCell change may be performed when signal quality of the candidate PSCell is higher than a threshold. After finding, in the candidate PSCell, a target cell that meets the execution triggering condition, the terminal device may autonomously determine to perform a candidate PSCell change. The A3 event may be an intra-frequency or inter-frequency handover event. When quality of service RSRP of a neighboring cell is higher than quality of service RSRP of a current serving cell by a threshold, an A3 event handover may be triggered. The A4 event is a handover event. When an RSRP value of an inter-frequency neighboring cell that is measured by the terminal device is greater than a threshold, the terminal device may perform a handover to the inter-frequency neighboring cell.

In an implementation, the CHO request response message does not include the execution triggering condition corresponding to the one or more candidate PSCells. In this implementation, the S-MN may determine the execution triggering condition corresponding to the one or more candidate PSCells.

It should be understood that the execution triggering condition corresponding to the one or more candidate PSCells is an execution triggering condition of a CPAC, and an execution triggering condition corresponding to one or more candidate PCells is an execution triggering condition of a CHO.

It should be understood that the S-MN or the first C-MN may separately determine the execution triggering condition corresponding to the one or more candidate PSCells. For example, when the execution triggering condition is that RSRP of the candidate PSCell is higher than that of a source PSCell by a preset threshold, the terminal device performs a PSCell change. If the preset threshold is set to 3 dB, candidate PSCells that meet the execution triggering condition include a candidate PSCell #1 and a candidate PSCell #2. If the preset threshold is set to 5 dB, candidate PSCells that meet the execution triggering condition include only the candidate PSCell #1. It can be learned that the candidate PSCell #1 with better signal quality can be selected by changing the preset threshold, to improve communication quality of the terminal device. In addition, if a candidate PSCell existing when the preset threshold of 3 dB is met can also meet a communication requirement of the terminal device, the S-MN or the first C-MN may determine that the preset threshold is 3 dB, so that the terminal device can flexibly choose to change to the candidate PSCell #1 or the candidate PSCell #2. In other words, the S-MN or the first C-MN may determine a specific execution triggering condition, to improve flexibility and accuracy of determining a PSCell to be used for an addition or to be used for a change.

In an implementation, before the S-MN receives the CHO request response message from the first C-MN, the first C-MN sends an addition request message to the first C-SN, where the addition request message is used to request the first C-SN to configure a transmission resource for the terminal device, and the first C-SN is a C-SN corresponding to the first C-MN. The first C-MN receives an addition request response message from the first C-SN, where the addition request response message includes the transmission resource. The transmission resource may be a random access time-frequency resource.

It should be understood that the first C-MN may correspond to one or more C-SNs, and the first C-SN belongs to the one or more C-SNs. The addition request message is used to request the first C-SN to allocate a resource to the terminal device in advance.

In an implementation, the first C-SN determines, based on the addition request message, SCG information that is allocated to the terminal device. The SCG information includes one or more of the following: a candidate PSCell provided for the terminal device, an SCG corresponding to the candidate PSCell, and SCG air interface resource configuration information. In other words, after the first C-SN receives the addition request message, if the first C-SN allows access, the first C-SN determines, in the list of candidate PSCells indicated by the addition request message, a candidate PSCell provided for the terminal device. The first C-SN reserves a resource for the terminal device in the candidate PSCell, determines another cell in the SCG for each prepared candidate PSCell, and feeds back the addition request response message to the first C-MN. The addition request response message indicates identifier information of the candidate PSCell and corresponding SCG radio air interface resource configuration information. When determining the candidate PSCell that meets the execution triggering condition, the terminal device may perform random access and configure the SCG based on a radio air interface resource configuration corresponding to the candidate PSCell.

In an implementation, the addition request response message includes the SCG information that is prepared in advance by the first C-SN for the terminal device. The first C-SN may send, to the first C-MN, the SCG information that is prepared in advance for the terminal device.

S330: The S-MN determines CPAC configuration information.

It should be understood that the S-MN determines the CPAC configuration information based on the information about the one or more candidate PSCells and the RRC configuration information of the first C-MN.

S340: The S-MN sends the CPAC configuration information to the terminal device.

In an implementation, the S-MN further sends CHO configuration information and measurement configuration information to the terminal device. The CPAC configuration information includes the information about the one or more candidate PSCells provided for the first C-MN and the execution triggering condition corresponding to the one or more candidate PSCells. The CHO configuration information includes information about the one or more candidate PCells provided for the first C-MN and the execution triggering condition corresponding to the one or more candidate PCells.

It should be understood that the information about the candidate PSCell may be referred to as information about a candidate MCG, and the information about the candidate PSCell may be referred to as information about a candidate SCG.

For example, the measurement configuration information includes one or more of the following content.
1. Measurement object (measurement object) A measurement object is an object on which the terminal device performs measurement, including a synchronization signal block (synchronization signal block, SSB) frequency, a physical broadcast channel (physical broadcast channel, PBCH) block frequency, an SSB subcarrier spacing, an SSB-based measurement timing configuration (SSB-based measurement timing configuration, SMTC) configuration, a trustlist cell, and a blocklist cell. In this application, the measurement object may be a to-be-measured frequency of the candidate PSCell and a to-be-measured frequency of the candidate PCell.
2. Measurement gap (measurement gap) A measurement gap is a time period during which the terminal device performs measurement on another frequency after leaving a current frequency. For details about a measurement gap configuration in an MR-DC scenario, refer to a 3GPP TS 37.340 protocol.
3. Reporting configuration (reporting configuration) A reporting configuration is a standard for triggering reporting of a measurement report and a format of the measurement report.
4. Triggering quantity (triggering quantity) A triggering quantity is a policy for triggering event reporting.
5. Measurement identity (measurement identity) A measurement ID combines the measurement object and the reporting configuration as a set.

The measurement gap configuration relates to two frequency ranges (frequency ranges, FRs), an FR1 and an FR2. The FR1 includes FRs supported by an LTE system and an NR system. Compared with the FR1, the FR2 is a high frequency, and may be considered as an FR supported by the NR system. A lowest frequency of the FR1 is greater than or equal to 450 MHz, and a highest frequency of the FR1 is less than or equal to 6 GHz. A lowest frequency of the FR2 is greater than or equal to 24.25 GHz, and a highest frequency of the FR2 is less than or equal to 52.6 GHz. The measurement gap configuration further relates to two measurement gap types. One type is configured for the terminal device, and this type of gap is also referred to as a per-UE gap. The other type is configured for the FR, and this type of gap is also referred to as a per-FR gap. The per-UE gap applies to the FR1 and the FR2. The per-FR gap means that two independent gap patterns are configured for the FR1 and the FR2, namely, an FR1 gap and an FR2 gap.

The per-UE gap or the per-FR gap may be configured based on a network preference of the terminal device and a capability of the terminal device to support independent FR measurement. If the per-UE gap is configured, the MN determines the gap pattern and a related gap sharing configuration. If the per-FR gap is configured, the measurement gap configuration varies based on a connection scenario. The following describes several listed connection scenarios in detail.

In an EN-DC scenario and an NGEN-DC scenario, the MN determines an FR1 gap pattern and a related gap sharing configuration of the FR1, and the SN determines an FR2 gap pattern and a related gap sharing configuration of the FR2. In NE-DC and NR-DC, the MN determines FR1 and FR2 gap patterns and related gap sharing configurations.

In EN-DC and NGEN-DC, the measurement gap configuration sent from the MN to the terminal device indicates whether the configuration from the MN is a per-UE gap configuration or an FR1 gap configuration. It may also be understood as that the MN provides a measurement gap type for the terminal device. In addition, the MN further indicates a configured measurement gap (a per-UE measurement gap or an FR1 measurement gap) and the measurement gap type to the SN. The MN and the SN may exchange assistance information of the measurement gap configuration. For a case of the per-UE gap, the SN may indicate, to the MN, an SN frequency list configured in the FR1 to be measured by the terminal device and an SN frequency list configured in the FR2 to be measured by the terminal device. In other words, for the MN, the assistance information of the measurement gap configuration includes the SN frequency list that is from the SN and that is configured in the FR1 to be measured by the terminal device and the SN frequency list that is from the SN and that is configured in the FR2 to be measured by the terminal device. For a case of the per-FR gap, the SN may indicate, to the MN, an SN frequency list configured in the FR1 to be measured by the terminal device, and the MN indicates, to the SN, an MN frequency list configured in the FR2 to be measured by the terminal device. In other words, for the MN, the assistance information of the measurement gap configuration includes the SN frequency list that is from the SN and that is configured in the FR1 to be measured by the terminal device. In other words, for the SN, the assistance information of the measurement gap configuration includes the SN frequency list that is from the MN and that is configured in the FR2 to be measured by the terminal device.

It may be understood that, in the NE-DC, the MN also indicates the configured per-UE measurement gap or FR1 measurement gap to the SN. The SN may feed back a gap acknowledgment to the MN. If the SN is configured with the per-FR measurement gap, the gap acknowledgment does not include any frequency list. In the NR-DC, the MN may indicate the configured per-UE measurement gap, FR1 measurement gap or FR2 measurement gap, and measurement gap type to the SN. The SN may indicate, to the MN, the SN frequency list configured in the FR1 to be measured by the terminal device and the SN frequency list configured in the FR2 to be measured by the terminal device.

The S-MN may configure a measurement gap based on a measurement object, for example, a to-be-measured frequency of the S-MN, a to-be-measured frequency of the C-MN, a to-be-measured frequency of the C-SN, and a to-be-measured frequency of the C-SN. In other words, the S-MN configures the measurement gap based on a plurality of to-be-measured frequencies, to avoid a case in which a part of the to-be-measured frequencies cannot be measured because the configured measurement gap is insufficient to measure the part of the to-be-measured frequencies. In addition, the S-MN may further provide a first measurement gap configuration and a measurement gap type to a source secondary node (source secondary node, S-SN), to assist the S-SN in determining, based on the first measurement gap configuration and the measurement gap type, whether to configure a gap for the terminal device and which type of gap to configure. For example, in the EN-DC scenario or the NGEN-DC scenario, if the first measurement gap configuration is a gap configuration of a first FR, and the measurement gap type is a measurement gap type for the first FR, the S-SN may further configure gap measurement of another FR for the terminal device, for example, gap measurement of a second FR.

In an implementation, the S-MN determines the CHO configuration information based on the RRC configuration information of the first C-MN, and the S-MN determines the measurement configuration information based on RRC configuration information of a to-be-measured frequency of the first C-MN and RRC configuration information of a to-be-measured frequency of the first C-SN.

It should be noted that the S-MN may send the CPAC configuration information and the CHO configuration information by using one message, and the measurement configuration information may be sent by using the same message as the CPAC configuration information and the CHO configuration information, or may be sent by using another message. For example, the message that includes the measurement configuration information may be sent to the terminal device before the CPAC configuration information and the CHO configuration information are sent. The following describes several specific manners in which the S-MN sends the CPAC configuration information, the CHO configuration information, and the measurement configuration information.

Manner 1: The S-MN sends a first message to the terminal device.

It should be understood that the first message includes the CPAC configuration information and the CHO configuration information, and the CHO configuration information includes the CPAC configuration information.

In an implementation, the first message may further include the measurement configuration information.

It should be understood that the S-MN simultaneously sends the CPAC configuration information, the CHO configuration information, and the measurement configuration information to the terminal device by using the first message. This helps the terminal device determine whether the execution triggering condition of the CHO and the execution triggering condition of the CPAC are met, to improve efficiency of completing the CPAC and the CHO.

Manner 2: The S-MN sends a second message and a third message to the terminal device.

It should be understood that the second message includes the CPAC configuration information and the CPAC configuration information, and the CHO configuration information includes the CPAC configuration information. The third message includes a measurement configuration information message.

It should be understood that the S-MN may separately send, to the terminal device, the second message that includes the CPAC configuration information and the CHO configuration information, and the third message that includes the measurement configuration information. The S-MN may first send the third message, and then send the second message, or may simultaneously send the second message and the third message.

Manner 3: The S-MN sends a fourth message to the terminal device.

It should be understood that the fourth message includes the CPAC configuration information and the CHO configuration information. The fourth message further includes indication information, and the indication information indicates a correspondence between the CPAC configuration information and the CHO configuration information.

In an implementation, the fourth message may further include the measurement configuration information.

It should be understood that the S-MN simultaneously sends the CPAC configuration information, the CHO configuration information, and the measurement configuration information to the terminal device by using the fourth message. This helps the terminal device determine whether the execution triggering condition of the CHO and the execution triggering condition of the CPAC are met, to improve efficiency of completing the CPAC and the CHO.

Manner 4: The S-MN sends a fifth message and a sixth message to the terminal device.

It should be understood that the fifth message includes the CPAC configuration information and the CHO configuration information, and the sixth message includes the measurement configuration information. The fifth message further includes indication information, and the indication information indicates a message of a correspondence between the CPAC configuration information and the CHO configuration information.

It should be understood that the S-MN may separately send, to the terminal device, the fifth message that includes the CPAC configuration information and the CHO configuration information, and the sixth message that includes the measurement configuration information. The S-MN may first send the sixth message, and then send the fifth message, or may simultaneously send the fifth message and the sixth message.

It should be understood that, in Manner 1 and Manner 2, the CPAC configuration information may be included in the CHO configuration information, and the CPAC configuration information and the CHO configuration information are both included in one message. The terminal device may determine, based on the CHO configuration information that includes the CPAC configuration information, the information about the candidate PCell, the execution triggering condition corresponding to the candidate PCell, the information about the candidate PSCell corresponding to the candidate PCell, and the execution triggering condition corresponding to the candidate PSCell. In addition to reducing signaling overheads, this helps the terminal device determine whether the execution triggering condition of the CHO and the execution triggering condition of the CPAC are met.

In Manner 3 and Manner 4, the CHO configuration information and the CPAC configuration information are included in different information elements in one message. In comparison with Manner 1 and Manner 2, the terminal device determines the correspondence between the CPAC configuration information and the CHO configuration information based on the indication information in the message, and further determines the information about the candidate PCell, the execution triggering condition corresponding to the candidate PCell, the information about the candidate PSCell corresponding to the candidate PCell, and the execution triggering condition corresponding to the candidate PSCell.

It may be understood that types of the first message to the sixth message are not limited in this application. For example, any one of the foregoing messages may be an RRC message sent to the terminal device, for example, an RRC reconfiguration (RRC reconfiguration) message. It should be understood that the S-MN may simultaneously send the measurement configuration information and configuration information (including the CHO configuration information and the CPAC configuration information) to the terminal device, or may first send the measurement configuration information and then send the configuration information. This is not limited in this embodiment of this application.

In an implementation, the measurement configuration information includes the measurement object and the measurement gap. The measurement object includes the to-be-measured frequency corresponding to the one or more candidate PSCells and the to-be-measured frequency corresponding to the one or more candidate PCells that belong to the first C-MN, and the measurement gap is determined based on the measurement object.

It should be understood that after the terminal device receives the CPAC configuration information, the CHO configuration information, and the measurement configuration information from the S-MN, the terminal device may further perform the following steps.

In an implementation, the terminal device determines, based on the CHO configuration information and the measurement configuration information, whether the execution triggering condition corresponding to the one or more candidate PCells is met; and/or the terminal device determines, based on the CPAC configuration information and the measurement configuration information, whether an execution triggering condition corresponding to one or more candidate PSCells corresponding to a first PCell is met when an execution triggering condition corresponding to the first candidate PCell is met. The first candidate PCell is any one of the one or more candidate PCells.

For example, the measurement configuration information includes CHO measurement configuration information and CPAC measurement configuration information.

In an implementation, when the execution triggering condition corresponding to the first candidate PCell is met, and the execution triggering condition corresponding to the one or more candidate PSCells corresponding to the first candidate PCell is met, the terminal device performs a handover to the first candidate PCell, and the terminal device performs an addition or a change to the candidate PSCell.

In an implementation, when the execution triggering condition corresponding to the first candidate PCell is met, and the execution triggering condition corresponding to the one or more candidate PSCells corresponding to the first candidate PCell is not met, the terminal device performs a handover to the first candidate PCell, and the terminal device retains the CPAC configuration information and continues measuring whether there is a candidate PSCell that meets the execution condition, to continue evaluating whether a CPAC candidate PSCell corresponding to the candidate PCell to which the handover is successfully performed meets the triggering condition. After the handover is completed, the first C-MN may be considered as an MN that is providing a service for the terminal device.

In an implementation, when the execution triggering condition corresponding to the one or more candidate PCells is not met, the terminal device does not perform the handover to the candidate PCell and the candidate PSCell.

It should be understood that the terminal device determines whether there is a candidate target cell (a candidate PCell or a candidate PSCell) that meets the execution triggering condition. If there is a candidate PCell that meets the execution triggering condition of the CHO, and a candidate PSCell of the candidate PCell meets the execution triggering condition of the CPAC, the terminal device simultaneously performs a handover to the candidate PCell and adds or changes the candidate PSCell. If there is only a candidate PCell that meets the execution triggering condition of the CHO, the terminal device may perform only a handover to the candidate PCell, retain a CPAC configuration, and continue measuring and determining whether an execution triggering condition corresponding to a candidate PSCell corresponding to the candidate PCell is met. If there is no candidate PCell meets the execution triggering condition of the CHO, the terminal device neither performs a handover to the candidate PCell nor adds or changes the candidate PSCell.

Based on the foregoing solution, the S-MN may generate the complete CPAC configuration information, and send the CPAC configuration information and the CHO configuration information to the terminal device together. The terminal device may determine, based on the CPAC configuration information, the CHO configuration information, and the measurement configuration information, whether the candidate PCell and the candidate PSCell meet the execution triggering condition, to determine whether to perform the handover to the candidate PCell and whether to add or change the candidate PSCell. In the method, the measurement configuration information can be coordinated and consistent with the CPAC configuration information, and the measurement configuration information may be for determining whether the execution triggering condition of the CPAC and the execution triggering condition of the CHO are met. The S-MN may configure the CHO and the CPAC for the terminal device, so that the terminal device can determine whether the execution triggering condition of the CHO and the execution triggering condition of the CPAC are met, to improve a success rate of a handover of the terminal device to a target cell and reduce signaling overheads.

In step S310 of the method 300, the CHO request message may include the candidate PSCell information set, or may not include the candidate PSCell information set. In other words, the candidate PSCell information set may be determined by the S-MN, or may be determined by the first C-MN.

The following uses a terminal device, one S-MN, and two candidate nodes (the first C-MN and the first C-SN) as an example to separately describe a configuration method 400 for determining the candidate PSCell information set by the S-MN and a configuration method 500 for determining the candidate PSCell information set by the first C-MN. It may be understood that the configuration method 400 and the configuration method 500 are based on the configuration method 300 shown in FIG. 3. For descriptions of the technical solutions provided in this application, mutual reference may be made between embodiments. Content described in the foregoing embodiments is not described again.

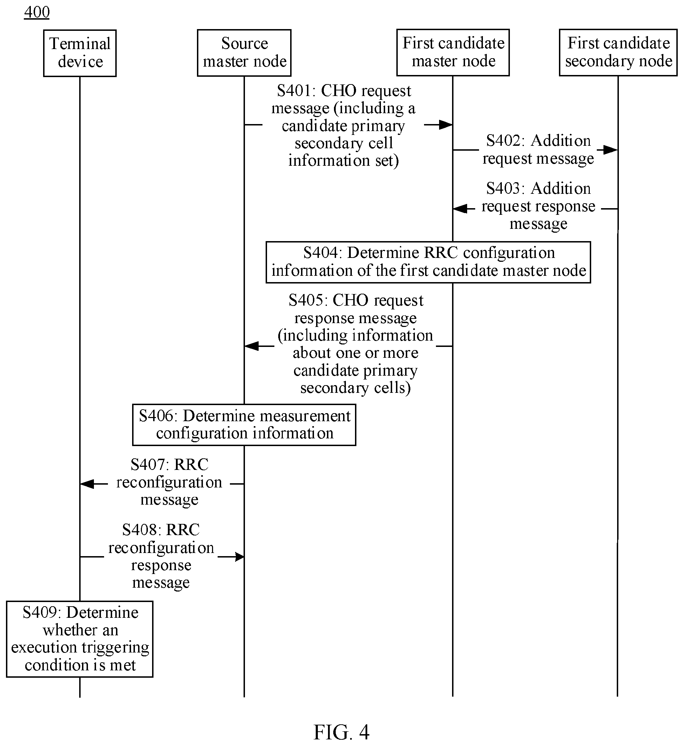

FIG. 4 shows a configuration method 400 according to an embodiment of this application. The method 400 may include the following steps.

S401: An S-MN sends a CHO request message to one or more C-MNs.

It should be understood that a first C-MN belongs to the one or more C-MNs. Before the S-MN sends the CHO request message, the S-MN may receive a measurement result reported by a terminal device. The S-MN determines a candidate PSCell information set based on the measurement result, where the candidate PSCell information set includes information about one or more candidate PSCells. For specific content of the candidate PSCell information set, refer to the descriptions in step S310 of the method 300.

It should be understood that an access network device to which the candidate PSCell belongs is a first C-SN. The S-MN determining the candidate PSCell information set is equivalent to the S-MN having a decision right to select a candidate PSCell, improving flexibility of the solution.

In an implementation, the CHO request message includes the information about the candidate PSCell. There may be one or more candidate PSCells. This is not limited in this application.

S402: The first C-MN sends an addition request message to one or more C-SNs.

It should be understood that the access network device to which the candidate PSCell belongs is the first C-SN. Therefore, the first C-MN may determine the first C-SN based on the candidate PSCell information set in the received CHO request message. The first C-SN belongs to the one or more C-SNs.

In an implementation, the first C-SN determines, based on the addition request message, SCG information that is allocated to the terminal device. The addition request message is used to request the first C-SN to allocate a transmission resource to the terminal device in advance, and the transmission resource may be a time-frequency resource.

S403: The first C-SN sends an addition request response message to the first C-MN.

In an implementation, the addition request response message includes the SCG information that is prepared by the first C-SN in advance for the terminal device, and the first C-SN sends, to the first C-MN, the SCG information that is prepared in advance for the terminal device.

S404: The first C-MN determines RRC configuration information of the first C-MN.

In an implementation, the RRC configuration information may also be replaced with RRC connection configuration information or another name. This is not limited herein.

S405: The first C-MN sends a CHO request response message to the S-MN.

In an implementation, the CHO request response message includes the RRC configuration information of the first C-MN determined by the first C-MN in S404. The CHO request response message includes the information about the one or more candidate PSCells. The information about the candidate PSCell includes identifier information of the candidate PSCell and SCG air interface resource configuration information corresponding to the candidate PSCell.

For example, the CHO request response message includes information about a candidate PCell and the information about the candidate PSCell.

It should be noted that there is a correspondence between the C-MN and the C-SN. Therefore, there is also a specific correspondence between the information about the candidate PCell that belongs to the C-MN and the information about the candidate PSCell that belongs to the C-SN.

In an implementation, the first C-MN determines an execution triggering condition corresponding to the one or more candidate PSCells. The RRC configuration information of the first C-MN includes the execution triggering condition corresponding to the one or more candidate PSCells. In other words, the execution triggering condition corresponding to the one or more candidate PSCells is configured by the first C-MN, and the first C-MN can improve flexibility and accuracy of determining the candidate PSCell.

In an implementation, when the first C-MN does not determine the execution triggering condition corresponding to the one or more candidate PSCells before sending the RRC configuration information of the first C-MN, the RRC configuration information of the first C-MN does not include the execution triggering condition corresponding to the one or more candidate PSCells. After the S-MN receives the RRC configuration information of the first C-MN that is sent by the first C-MN, the S-MN determines the execution triggering condition corresponding to the one or more candidate PSCells. In other words, the execution triggering condition corresponding to the one or more candidate PSCells is configured by the S-MN, and the S-MN can improve flexibility and accuracy of determining the candidate PSCell.

S406: The S-MN determines measurement configuration information.

The measurement configuration information includes CHO measurement configuration information and CPAC measurement configuration information.

In this application, the measurement configuration information is delivered by the S-MN to the terminal device. The terminal device may perform related measurement based on the measurement configuration information, and then send a measurement result to the S-MN by using a measurement report.

For detailed descriptions of the measurement configuration information, refer to related content in the foregoing method 300.

S407: The S-MN sends an RRC reconfiguration message to the terminal device.

For example, the S-MN may send CPAC configuration information and CHO configuration information by using the RRC reconfiguration message. The measurement configuration information may be sent by using the same RRC reconfiguration message as the CPAC configuration information and the CHO configuration information, or may be sent by using another RRC reconfiguration message.

For a specific manner in which the S-MN sends the CHO configuration information and the CPAC configuration information to the terminal device, refer to content in step S340 in the foregoing method 300. Details are not described herein again.

For example, the RRC reconfiguration message may indicate a CHO configuration, or both a CHO configuration and a CPAC configuration. After receiving the RRC reconfiguration message, the terminal device may determine to subsequently perform a CHO procedure or the CHO procedure and a CPAC procedure.

For example, the execution triggering condition corresponding to the candidate PSCell is also carried in the RRC reconfiguration message of the S-MN. If the first C-MN does not determine the execution triggering condition corresponding to the candidate PSCell, the S-MN determines the execution triggering condition corresponding to the candidate PSCell, and the S-MN can improve flexibility and accuracy of determining the candidate PSCell.

In an implementation, the RRC reconfiguration message sent by the S-MN further includes a transmission resource preconfigured by the C-SN for the terminal device.

S408: The terminal device sends an RRC reconfiguration response message to the S-MN.

S409: The terminal device determines whether the execution triggering condition is met.

It should be understood that the terminal device determines, based on the received measurement configuration information, CHO configuration information, and CPAC configuration information, whether there is a target cell that meets the execution triggering condition. The target cell may be a candidate PCell or a candidate PSCell.

For specific content about whether the terminal device performs a handover to the candidate PCell and whether to add or change the candidate PSCell, refer to content in step S340 in the method 300.

It should be understood that the CHO procedure is a handover to a candidate PCell of the MN, and the CPAC procedure is an addition or a change of a candidate PSCell of the SN. When a candidate PCell triggers a CHO handover, the terminal device may attempt to access the candidate PCell, and when a candidate PSCell of the candidate PCell meets the triggering condition, the terminal device may attempt to access the candidate PSCell.

For ease of understanding, the following uses an example to describe a correspondence between a candidate PCell (a candidate cell of a CHO) and a candidate PSCell (a candidate cell of a CPAC). A PCell 1 corresponds to a PSCell 1, a PSCell 2, and a PSCell 3. When the PCell 1 meets the execution triggering condition, the terminal device may attempt to perform a handover to the PCell 1. When the PCell 1 meets the execution triggering condition, and the PSCell 1 meets the execution triggering condition, the terminal device may first attempt to perform a handover to the PCell 1, and then attempt to access the PSCell 1. When the PCell 1 meets the execution triggering condition, the PSCell 1 meets the execution triggering condition, and the PSCell 2 meets the execution triggering condition, the terminal device may first attempt to perform a handover to the PCell 1, and then attempt to access a PSCell with better quality of service in the foregoing two PSCells.

In this embodiment of this application, the S-MN provides the PSCell information set, and generates the CPAC configuration information, so that the CPAC measurement configuration information can be coordinated and consistent with the CPAC configuration information. In addition, the S-MN sends the CHO configuration information and the CPAC configuration information to the terminal device in a same message (for example, the RRC reconfiguration message), so that both the CHO and the CPAC can be configured for the terminal device, and the terminal device can determine whether an execution triggering condition of the CHO and an execution triggering condition of the CPAC are met, to more quickly complete the CPAC, and add or change to a more appropriate PSCell.

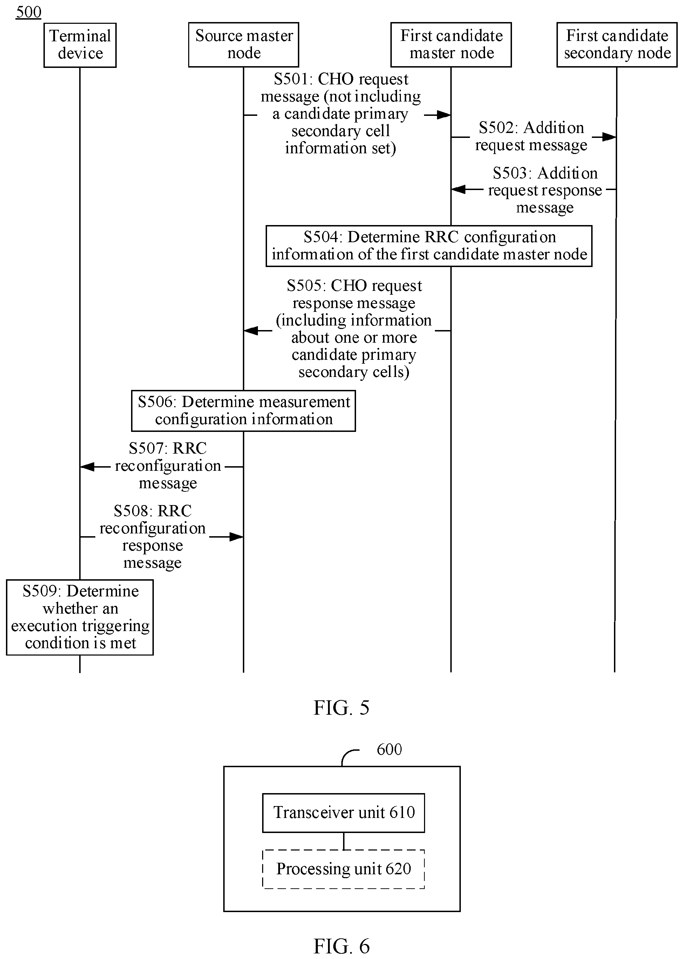

FIG. 5 shows a configuration method 500 according to an embodiment of this application. The method 500 may include the following steps.

S501: An S-MN sends a CHO request message to one or more C-MNs.

It should be understood that a first C-MN belongs to the one or more C-MNs. Before the S-MN sends the CHO request message, the S-MN may receive a measurement result reported by a terminal device.

In an implementation, the CHO request message does not include a candidate PSCell information set. After the first C-MN receives the CHO request message sent by the S-MN, the first C-MN determines a PSCell information set, where the PSCell information set includes information about one or more PSCells. The PSCell information set may be PSCell list information, or a set of other PCell information.

It should be understood that, the PSCell belongs to a first C-SN, and the first C-MN determining the PSCell information set is equivalent to the first C-MN having a decision right to select the PSCell, improving flexibility of the solution. There may be one or more PSCells. This is not limited in this application.

S502: The first C-MN sends an addition request message to one or more C-SNs.

It should be understood that the PSCell belongs to the first C-SN. Therefore, the first C-MN may determine the first C-SN based on the PSCell information set in the received CHO request message. The first C-SN belongs to the one or more C-SNs.

In an implementation, the first C-SN determines, based on the addition request message, SCG information that is allocated to the terminal device. The addition request message is used to request the first C-SN to allocate a transmission resource to the terminal device in advance, and the transmission resource may be a time-frequency resource.

S503: The first C-SN sends an addition request response message C-MN to the first C-MN.

For detailed content of step S503, refer to step S403 in the method 400.

S504: The first C-MN determines RRC configuration information of the C-MN.

For detailed content of step S504, refer to step S404 in the method 400.

S505: The first C-MN sends a CHO request response message S-MN to the S-MN.

For detailed content of step S505, refer to step S405 in the method 400.

S506: The S-MN determines measurement configuration information.

For detailed content of step S506, refer to step S406 in the method 400.

S507: The S-MN sends an RRC reconfiguration message S-MNS-MN to the terminal device.

For detailed content of step S507, refer to step S407 in the method 400.

S508: The terminal device sends an RRC reconfiguration response message to the S-MN.

S509: The terminal device determines whether the execution triggering condition is met.

For specific content about whether the terminal device performs a handover to the PCell and whether to add or change the PSCell, refer to content in step S340 in the method 300.

In this embodiment of this application, the first C-MN provides the PSCell information set, and the S-MN generates CPAC configuration information, so that CPAC measurement configuration information can be coordinated and consistent with the CPAC configuration information. In addition, the S-MN sends CHO configuration information and the CPAC configuration information to the terminal device in a same message (for example, an RRC reconfiguration message), so that both CHO and CPAC can be configured for the terminal device, and the terminal device can determine whether an execution triggering condition of the CHO and an execution triggering condition of the CPAC are met, to more quickly complete the CPAC, and add or change to a more appropriate PSCell.

In conclusion, in the foregoing method 400, the S-MN provides the PSCell information set, and generates the CPAC configuration information; and in the foregoing method 500, the first C-MN provides the PSCell information set, and the S-MN generates the CPAC configuration information. In the foregoing two methods, the S-MN uniformly generates the CPAP configuration information for the terminal device, and sends the measurement configuration information, the CHO configuration information, and the CPAC configuration information, so that the CPAC configuration information can be coordinated and consistent with the measurement configuration information, to improve a success rate of a handover of the terminal device to the target cell.

The foregoing describes in detail the configuration method provided in embodiments of this application with reference to FIG. 3 to FIG. 5. The following describes in detail communication apparatuses provided in embodiments of this application with reference to FIG. 6 to FIG. 8. It should be understood that descriptions of apparatus embodiments correspond to the descriptions of the method embodiments. Therefore, for content that is not described in detail, refer to the method embodiments above. For brevity, details of a part of content are not described herein again.

FIG. 6 is a block diagram of a communication apparatus according to an embodiment of this application. The apparatus 600 includes a transceiver unit 610, and the transceiver unit 610 may be configured to implement a corresponding communication function. The transceiver unit 610 may also be referred to as a communication interface or a communication unit.

In a possible design, the apparatus 600 may further include a processing unit 620, and the processing unit 620 may be configured to process data.

In a possible design, the apparatus 600 further includes a storage unit. The storage unit may be configured to store instructions and/or data. The processing unit 620 may read the instructions and/or the data in the storage unit, so that the apparatus implements actions of different communication devices in the foregoing method embodiments. For example: An action of the access network device (the S-MN, the C-MN, or the C-SN) or the terminal device.

The apparatus 600 may be configured to perform an action performed by the access network device or the terminal device in the foregoing method embodiments. In this case, the apparatus 600 may be the access network device or the terminal device, or a component of the access network device or the terminal device. The transceiver unit 610 is configured to perform a transceiver-related operation of the access network device or the terminal device in the foregoing method embodiments, and the processing unit 620 is configured to perform processing-related operations of the access network device or the terminal device in the foregoing method embodiments.

In a design, the apparatus 600 is configured to perform actions performed by the S-MN in the foregoing method embodiments.

The apparatus 600 may implement the steps or procedures performed by the S-MN in the method embodiments according to embodiments of this application. The apparatus 600 may include units configured to perform the method performed by the S-MN in the method embodiments. In addition, the units in the apparatus 600 and the foregoing other operations and/or functions are separately intended to implement corresponding procedures of the S-MN in the method embodiments.

When the apparatus 600 is configured to perform the method in FIG. 3, the transceiver unit 610 may be configured to perform receiving and sending steps in the method 300, for example, steps S310, S320, and S340. The processing unit 620 may be configured to perform a processing step in the method 300, for example, step S330.

It should be understood that a specific process in which the units perform the foregoing corresponding steps is described in detail in the foregoing method embodiments. For brevity, details are not described herein. In addition, beneficial effects brought by performing the foregoing corresponding steps by the units are described in detail in the foregoing method embodiments, and details are not described herein again.

In another design, the apparatus 600 is configured to perform actions performed by the first C-MN in the foregoing method embodiments.

The apparatus 600 may implement the steps or procedures performed by the first C-MN in the method embodiments according to embodiments of this application. The apparatus 600 may include units configured to perform the method performed by the first C-MN in the method embodiments. In addition, the units in the apparatus 600 and the foregoing other operations and/or functions separately implement corresponding procedures in the method embodiments of the first C-MN in the method embodiments.

When the apparatus 600 is configured to perform the method in FIG. 3, the transceiver unit 610 may be configured to perform the receiving and sending steps in the method 300, for example, step S320.

It should be understood that a specific process in which the units perform the foregoing corresponding steps is described in detail in the foregoing method embodiments. For brevity, details are not described herein.

In another design, the apparatus 600 is configured to perform actions performed by the terminal device in the foregoing method embodiments.

The apparatus 600 may implement the steps or procedures performed by the terminal device in the method embodiments according to embodiments of this application. The apparatus 600 may include units configured to perform the method performed by the terminal device in the method embodiments. In addition, the units in the apparatus 600 and the foregoing other operations and/or functions are separately intended to implement corresponding procedures of the terminal device in the method embodiments.

When the apparatus 600 is configured to perform the method in FIG. 3, the transceiver unit 610 may be configured to perform the receiving and sending steps in the method 300, for example, step S340.

It should be understood that a specific process in which the units perform the foregoing corresponding steps is described in detail in the foregoing method embodiments. For brevity, details are not described herein.

It should be understood that the apparatus 600 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 600 may be specifically the access network device or the terminal device in the foregoing embodiments, and may be configured to perform procedures and/or steps corresponding to the access network device or the terminal device in the foregoing method embodiments.

The function may be implemented by hardware, or may be implemented by hardware executing corresponding software. The hardware or the software includes one or more modules or units corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform a sending and receiving operation and a related processing operation in the method embodiments.

In addition, the transceiver unit 610 may alternatively be a transceiver circuit (for example, may include a receiving circuit and a sending circuit), and the processing unit may be a processing circuit.

It should be noted that the apparatus in FIG. 6 may be the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

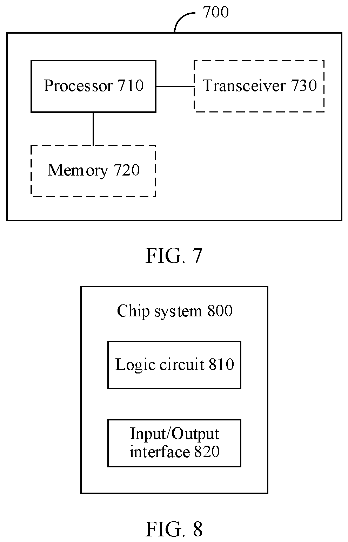

As shown in FIG. 7, an embodiment of this application provides another communication apparatus 700. The apparatus 700 includes a processor 710. The processor 710 is coupled to a memory 720, the memory 720 is configured to store a computer program or instructions and/or data, and the processor 710 is configured to execute the computer program or the instructions stored in the memory 720, or read the data stored in the memory 720, to perform the method in the foregoing method embodiments.

For example, there are one or more processors 710.

For example, there are one or more memories 720.

For example, the memory 720 and the processor 710 are integrated or disposed separately.

For example, as shown in FIG. 7, the apparatus 700 further includes a transceiver 730. The transceiver 730 is configured to receive and/or send a signal. For example, the processor 710 is configured to control the transceiver 730 to receive and/or send the signal.

In a solution, the apparatus 700 is configured to implement operations performed by the S-MN, the C-MN, the C-SN, or the terminal device in the foregoing method embodiments.

For example, the processor 710 is configured to execute the computer program or the instructions stored in the memory 720, to implement related operations of the terminal device in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

As shown in FIG. 8, an embodiment of this application provides a chip system 800. The chip system 800 (or may be referred to as a processing system) includes a logic circuit 810 and an input/output interface (input/output interface) 820.

The logic circuit 810 may be a processing circuit in the chip system 800. The logic circuit 810 may be coupled to a storage unit, and invoke instructions in the storage unit, so that the chip system 800 can implement the methods and functions in embodiments of this application. The input/output interface 820 may be an input/output circuit in the chip system 800, and outputs information processed by the chip system 800, or inputs to-be-processed data or signaling information to the chip system 800 for processing.

In a solution, the chip system 800 is configured to implement operations performed by the S-MN, the C-MN, the C-SN, or the terminal device in the foregoing method embodiments.

For example, the logic circuit 810 is configured to implement related operations processed by the S-MN, the C-MN, the C-SN, or the terminal device in the foregoing method embodiments. The input/output interface 820 is configured to implement operations related to sending and/or receiving of the S-MN, the C-MN, the C-SN, or the terminal device in the foregoing method embodiments.

An embodiment of this application further provides a computer-readable storage medium. The computer-readable storage medium stores computer instructions for implementing the methods performed by the access device or the terminal device in the foregoing method embodiments.

For example, when a computer program is executed by a computer, the computer is enabled to implement the method performed by the access network device or the terminal device in the foregoing method embodiments.

An embodiment of this application further provides a computer program product, including instructions. When the instructions are executed by a computer, the methods performed by the access network device or the terminal device in the foregoing method embodiments are implemented.

For explanations and beneficial effects of related content in any one of the apparatuses provided above, refer to the corresponding method embodiment provided above. Details are not described herein again.

In several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

Terminologies such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. These components may be executed from various computer-readable media that store various data structures. The components may communicate by using a local and/or remote process and based on, for example, a signal having one or more data packets (for example, data from two components interacting with another component in a local system, a distributed system, and/or across a network such as the internet interacting with other systems by using the signal).

In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A configuration method, comprising:
sending, by a source master node, a conditional handover CHO request message to one or more candidate master nodes;
receiving, by the source master node, a CHO request response message from a first candidate master node, wherein the first candidate master node belongs to the one or more candidate master nodes, and the CHO request response message comprises information about one or more candidate primary secondary cells provided for the first candidate master node and radio resource control RRC configuration information of the first candidate master node;
determining, by the source master node, conditional primary secondary cell addition/change CPAC configuration information based on the information about the one or more candidate primary secondary cells and the RRC configuration information of the first candidate master node; and
sending, by the source master node, the CPAC configuration information to a terminal device.

2. The method according to claim 1, wherein the method further comprises:
sending, by the source master node, CHO configuration information and measurement configuration information to the terminal device.

3. The method according to claim 1 or 2, wherein the CHO request message comprises a candidate primary secondary cell information set, and the candidate primary secondary cell information set comprises the information about the one or more candidate primary secondary cells.

4. The method according to any one of claims 1 to 3, wherein when the CHO request response message does not comprise an execution triggering condition corresponding to the one or more candidate primary secondary cells, the method further comprises:
determining, by the source master node, the execution triggering condition corresponding to the one or more candidate primary secondary cells.

5. The method according to any one of claims 2 to 4, wherein the CPAC configuration information and the CHO configuration information are comprised in a first message sent by the source master node to the terminal device, and the CHO configuration information comprises the CPAC configuration information.

6. The method according to any one of claims 2 to 4, wherein the CPAC configuration information and the CHO configuration information are comprised in a second message sent by the source master node to the terminal device, the second message further comprises indication information, and the indication information indicates a correspondence between the CPAC configuration information and the CHO configuration information.

7. A configuration method, comprising:
receiving, by a first candidate master node, a conditional handover CHO request message from a source master node; and
sending, by the first candidate master node, a CHO request response message to the source master node, wherein the CHO request response message comprises information about one or more candidate primary secondary cells provided for the first candidate master node and radio resource control RRC configuration information of the first candidate master node.

8. The method according to claim 7, wherein the CHO request message comprises a candidate primary secondary cell information set, and the candidate primary secondary cell information set comprises the information about the one or more candidate primary secondary cells.

9. The method according to claim 7, wherein when the CHO request message does not comprise a candidate primary secondary cell information set, the method further comprises:
determining, by the first candidate master node, the candidate primary secondary cell information set.

10. The method according to any one of claims 7 to 9, wherein when the CHO request response message comprises an execution triggering condition corresponding to the one or more candidate primary secondary cells, the method further comprises:
determining, by the first candidate master node, the execution triggering condition corresponding to the one or more candidate primary secondary cells.

11. The method according to any one of claims 7 to 10, wherein before the sending, by the first candidate master node, a CHO request response message to the source master node, the method further comprises:
sending, by the first candidate master node, an addition request message to a first candidate secondary node, wherein the addition request message is used to request the first candidate secondary node to configure a transmission resource for a terminal device, and the first candidate secondary node is a candidate secondary node corresponding to the first candidate master node; and
receiving, by the first candidate master node, an addition request response message from the first candidate secondary node, wherein the addition request response message comprises the transmission resource.

12. A configuration method, wherein the method is applied to a terminal device, and comprises:
receiving conditional primary secondary cell addition/change CPAC configuration information, conditional handover CHO configuration information, and measurement configuration information from a source master node, wherein the CPAC configuration information comprises information about one or more candidate primary secondary cells provided for a first candidate master node and an execution triggering condition corresponding to the one or more candidate primary secondary cells, and the CHO configuration information comprises information about one or more candidate primary cells that belong to the first candidate master node and an execution triggering condition corresponding to the one or more candidate primary cells; and
determining, based on the CHO configuration information and the measurement configuration information, whether the execution triggering condition corresponding to the one or more candidate primary cells is met; and/or
determining, based on the CPAC configuration information and the measurement configuration information, whether an execution triggering condition corresponding to one or more candidate primary secondary cells corresponding to a first candidate primary cell is met when an execution triggering condition corresponding to the first candidate primary cell is met, wherein the first candidate primary cell belongs to the one or more candidate primary cells.

13. The method according to claim 12, wherein the method further comprises:
when the execution triggering condition corresponding to the first candidate primary cell is met, and the execution triggering condition corresponding to the one or more candidate primary secondary cells corresponding to the first candidate primary cell is not met,
performing, by the terminal device, a handover to the first candidate primary cell, and retaining, by the terminal device, the CPAC configuration information.

14. The method according to claim 12 or 13, wherein the CPAC configuration information and the CHO configuration information are comprised in a first message received by the terminal device from the source master node, and the CHO configuration information comprises the CPAC configuration information.

15. The method according to claim 12 or 13, wherein the CPAC configuration information and the CHO configuration information are comprised in a second message received by the terminal device from the source master node, the second message further comprises indication information, and the indication information indicates a correspondence between the CPAC configuration information and the CHO configuration information.

16. A communication apparatus, comprising a module configured to perform the method according to any one of claims 1 to 6, comprising a module configured to perform the method according to any one of claims 7 to 11, or comprising a module configured to perform the method according to any one of claims 12 to 15.

17. A communication apparatus, comprising a processor coupled to a memory, wherein the memory is configured to store a computer program, and the processor is configured to run the computer program, to enable the communication apparatus to perform the method according to any one of claims 1 to 6, or enable the communication apparatus to perform the method according to any one of claims 7 to 11, or enable the communication apparatus to perform the method according to any one of claims 12 to 15.

18. The communication apparatus according to claim 17, further comprising one or both of the memory and a transceiver, and the transceiver is configured to receive a signal and/or send a signal.

19. A communication system, wherein the communication system comprises a source master node configured to perform the method according to any one of claims 1 to 6 and one or more candidate master nodes comprising a first candidate master node, and the first candidate master node is configured to perform the method according to any one of claims 7 to 11.

20. The communication system according to claim 19, wherein the communication system comprises a terminal device configured to perform the method according to any one of claims 12 to 15.

21. A computer-readable storage medium, wherein the computer-readable storage medium stores a computer program or instructions, and when the computer program or the instructions are run on a computer, the method according to any one of claims 1 to 6 is performed, the method according to any one of claims 7 to 11 is performed, or the method according to any one of claims 12 to 15 is performed.

22. A computer program product, wherein the computer program product comprises a computer program or instructions, and when the computer program or the instructions are run on a computer, the method according to any one of claims 1 to 6 is performed, the method according to any one of claims 7 to 11 is performed, or the method according to any one of claims 12 to 15 is performed.
